# EUROPÄISCHE PATENTANMELDUNG

(11) **EP 1 955 879 A1**
(43) Veröffentlichungstag der Anmeldung: **13.08.2008**
(21) Anmeldenummer: 07033592.2
(22) Anmeldetag: 27.12.2007
(51) Int. Cl.: B60H 1/00

(54) **Kraftfahrzeug mit einer Klimaanlage**

(30) Priorität: 06.02.2007 DE 102007005873
(71) Anmelder: Enerday GmbH, 82131 Stockdorf (DE)
(72) Erfinder: Pfalzgraf, Manfred, 82211 Herrsching am Ammersee (DE); Bedenbecker, Markus, 82131 Gauting (DE); Boltze, Matthias, 17039 Wulkenzin (OT Neuendorf) (DE); Engl, Andreas, 80689 München (DE)
(74) Vertreter: Schumacher & Willsau

(57) **Zusammenfassung**

Die Erfindung betrifft ein Kraftfahrzeug (10) mit einer Klimaanlage (12), welche eine Brennstoffzelle (26) zum Betreiben eines Kältekreises (16) aufweist, einer Luftkonditioniereinrichtung (92) zum Konditionieren von Luft mittels Abwärme eines Antriebsaggregats (94) und/oder einer vom Antriebsaggregat (94) direkt oder indirekt antreibbaren Klimaanlage, und einer Luftführung (74) zum Führen von Luft von der Luftkonditioniereinrichtung (92) über einen Luftauslass (98, 108) in einen Fahrzeuginnenraum (78), wobei die Luftführung (74) auch dazu angepasst ist, von der Klimaanlage (12) konditionierte Luft zum Luftauslass (98, 108) zu führen.

## Beschreibung

Die Erfindung betrifft ein Kraftfahrzeug mit einer Klimaanlage, welche eine Brennstoffzelle zum Betreiben eines Kältekreises aufweist.

Aus der DE 102 23 949 A1 ist eine Standklimaanlage mit einer Brennstoffzelle zur Klimatisierung eines Fahrzeugs bekannt.

Insbesondere bei einer Nachrüstung ist jedoch die Einbindung einer solchen Klimaanlage oft aufwendig.

Es ist daher die Aufgabe der vorliegenden Erfindung ein Kraftfahrzeug derart weiterzubilden, dass eine einfache Einbindung einer Klimaanlage in ein Kraftfahrzeug realisiert werden kann.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die Erfindung stellt ein Kraftfahrzeug bereit mit einer Klimaanlage, welche eine Brennstoffzelle zum Betreiben eines Kältekreises aufweist, einer Luftkonditioniereinrichtung zum Konditionieren von Luft mittels Abwärme eines Antriebsaggregats und/oder einer vom Antriebsaggregat direkt oder indirekt antreibbaren Klimaanlage, und einer Luftführung zum Führen von Luft von der Luftkonditioniereinrichtung über einen Luftauslass in einen Fahrzeuginnenraum, wobei die Luftführung auch dazu angepasst ist, von der Klimaanlage konditionierte Luft zum Luftauslass zu führen. Dadurch müssen insbesondere bei der Nachrüstung der Klimaanlage nicht durch das komplette Fahrzeug reichende Luftführungen installiert werden, sondern die Klimaanlage wird an bereits bestehende werkseitig im Fahrzeug vorgesehene Luftführungen angekoppelt. Diese bereits vorhandenen Luftführungen reichen in der Regel vom Motorraum bis zum Fußraum der hinteren Sitzbank. Der große Vorteil besteht nun darin, dass ohne aufwendige Umbaumaßnahmen die Luft der Klimaanlage über die das Fahrzeug durchziehenden Luftführungen sogar über Luftauslässe in den Fahrzeuginnenraum geführt werden kann, welche relativ weit von der Klimaanlage entfernt sind.

Darüber hinaus kann vorgesehen sein, dass zwischen dem Luftauslass und der Luftkonditioniereinrichtung sowie zwischen dem Luftauslass und der Klimaanlage jeweils Rückschlagklappen vorgesehen sind, welche jeweils nur eine Strömung hin zum Luftauslass zulassen. Durch diese Rückschlagklappen können die Luftzirkulationskreise der Luftkonditioniereinrichtung und der Klimaanlage trotz gemeinsam verwendeter Luftführugen effektiv voneinander getrennt werden.

Vorteilhafterweise kann vorgesehen sein, dass des Weiteren eine Luftführung vorgesehen ist, um Luft über einen Lufteinlass aus dem Fahrzeuginnenraum zu der Luftkonditioniereinrichtung zu führen, wobei die Luftführung auch dazu angepasst ist, Luft vom Fahrzeuginnenraum zur Klimaanlage zu führen. Durch die Ankopplung der Klimaanlage an die mit dem Lufteinlass in Verbindung stehende Luftführung kann auch ein Umluftkonzept realisiert werden, bei dem die Klimaanlage nicht von Außen angesaugte Luft klimatisiert, sondern aus dem Fahrzeuginnenraum angesaugte Luft rezirkuliert. Der selbe Vorteil trifft in übertragener Weise auch für die Luftkonditioniereinrichtung zu, wodurch bei dieser ein Umluftkonzept realisiert werden kann.

Eine weitere vorteilhafte Weiterbildung besteht darin, dass zwischen dem Lufteinlass und der Luftkonditioniereinrichtung sowie zwischen dem Lufteinlass und der Klimaanlage jeweils Rückschlagklappen vorgesehen sind, welche jeweils nur eine Strömung weg vom Lufteinlass zulassen. Durch diese Rückschlagklappen kann erreicht werden, dass bei Betrieb der Klimaanlage durch den dadurch entstehenden Sog, insbesondere im Umluftbetrieb, die konditioniereinrichtungsseitig angeordnete Rückschlagklappe schließt und die Luft ausschließlich aus dem Fahrzeuginnenraum angesaugt wird, so dass keine Luft von der Luftkonditioniereinrichtung her angesaugt werden kann. Der selbe Vorteil trifft in übertragener Weise auch bei Betrieb der Luftkonditioniereinrichtung insbesondere im Umluftbetrieb zu.

Ferner kann vorteilhafterweise vorgesehen sein, dass der Luftauslass von der Luft der Luftkonditioniereinrichtung und der Luft der Klimaanlage aus unterschiedlichen Richtungen anströmbar ist. Dies ermöglicht eine völlig unabhängige Anordnung der Klimaanlage. Diese unterschiedliche Anströmrichtung gilt in übertragener Weise auch für den Lufteinlass.

Vorteilhafterweise kann vorgesehen sein, dass die Klimaanlage im Kofferraum des Kraftfahrzeugs angeordnet ist und die Luftkonditioniereinrichtung im Motorraum des Kraftfahrzeugs angeordnet ist. Durch eine derartige Anordnung der Klimaanlage ist eine einfache Montage und gute Nachrüstbarkeit gewährleistet. Ferner ist der Kofferraum eine ideale Ausgangsbasis, um die Klimaanlage an die mindestens bis zum Fußraum reichenden und bereits werkseitig vorhandenen Luftführungen anzukoppeln.

Eine bevorzugte Ausführungsform der Erfindung wird nachfolgend mit Bezug auf die begleitenden Zeichnungen beispielhaft erläutert.

Es zeigen:
- Figur 1: eine schematische Darstellung einer Klimaanlage;
- Figur 2: eine schematische Darstellung des erfindungsgemäßen Kraftfahrzeugs mit der Klimaanlage; und
- Figur 3: ein Flussdiagramm eines Klimatisierungsbetriebs.

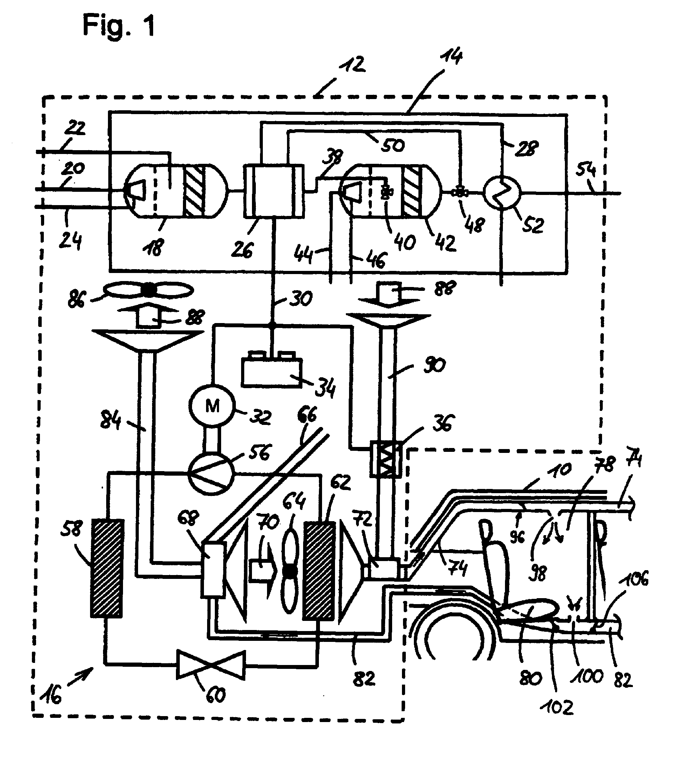

Figur 1 zeigt eine schematische Darstellung einer Klimaanlage. Die in einem Kraftfahrzeug 10 installierte Klimaanlage 12, die mit einer gestrichelten Linie umrissen ist, umfasst als Hauptelemente ein Brennstoffzellensystem 14 und einen Kältekreis 16.

Das Brennstoffzellensystem 14 umfasst einen Reformer 18, dem über einen Brennstoffstrang 20 aus einem nicht dargestellten Brennstofftank Brennstoff zuführbar ist. Ferner ist dem Reformer 18 an einer zweiten Brennstoffzuführstufe mittels eines Brennstoffstrangs 22 ebenfalls aus dem Brennstofftank Brennstoff zuführbar. Als Brennstoffsorten kommen Diesel, Benzin, Erdgas und weitere aus dem Stand der Technik bekannte Brennstoffsorten in Frage. Weiterhin ist dem Reformer 18 über einen Oxidationsmittelstrang 24 Oxidationsmittel, d.h. insbesondere Luft, zuführbar. Das von dem Reformer 18 erzeugte Reformat ist einem Brennstoffzellenstapel 26 zuführbar. Alternativ kann anstatt des Brennstoffzellenstapels 26 auch nur eine Brennstoffzelle vorgesehen sein. Bei dem Reformat handelt es sich um ein wasserstoffhaltiges Gas, das in dem Brennstoffzellenstapel 26 mit Hilfe von über einen Kathodenzuluftstrang 28 geförderter Kathodenzuluft unter Erzeugung von elektrischer Energie und Wärme umgesetzt wird. Die erzeugte elektrische Energie ist über eine elektrische Leitung 30 einem Elektromotor 32, einer Batterie 34 und einer elektrischen Heizeinrichtung 36 der Klimaanlage 12 zuführbar. Dies kann auf direktem Weg erfolgen oder durch Einspeisung der Energie über einen zentralen Knoten in das elektrische Bordnetz des Kraftfahrzeugs 10. Im dargestellten Fall ist das Anodenabgas über einen Anodenabgasstrang 38 einer Mischeinheit 40 eines Nachbrenners 42 zuführbar. Ferner ist dem Nachbrenner 42 über einen Brennstoffstrang 44 Brennstoff aus dem Brennstofftank und über einen Oxidationsmittelstrang 46 Oxidationsmittel zuführbar. In den Brennstoffsträngen 20, 22 und 44 sind geeignete, nicht dargestellte Fördereinrichtungen, wie beispielsweise Pumpen, angeordnet. Ebenso sind in den Oxidationsmittelsträngen 24 und 46 entsprechende, nicht dargestellte Fördereinrichtungen, in diesem Fall vorzugsweise Gebläse, angeordnet. Diese Fördereinrichtungen können direkt vom Brennstoffzellenstapel 26 oder von der Batterie 34 mit Strom versorgt werden. In dem Nachbrenner 42 erfolgt eine Umsetzung des abgereicherten Anodenabgases mit dem geförderten Brennstoff und Oxidationsmittel zu einem Verbrennungsabgas, welches in einer Mischeinheit 48 mit Kathodenabluft vermischt wird, die über einen Kathodenabluftstrang 50 von dem Brennstoffzellenstapel 26 zu der Mischeinheit 48 gefördert wird. Das Verbrennungsabgas, welches nahezu keine Schadstoffe enthält, durchströmt einen Wärmetauscher 52 zum Vorwärmen der Kathodenzuluft und verlässt schließlich das Brennstoffzellensystem 14 über einen Abgasauslass 54.

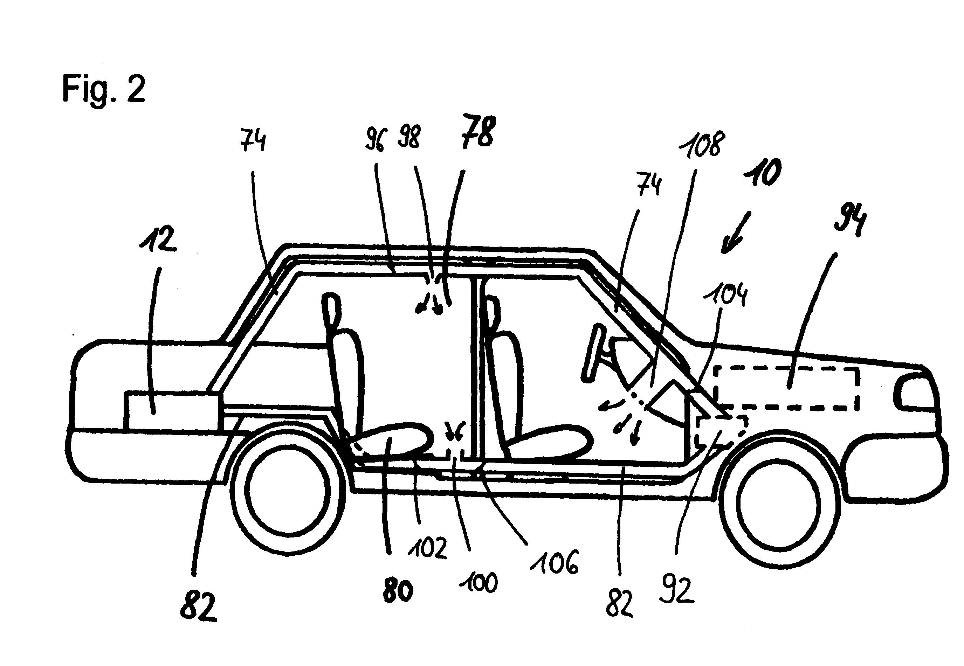

In dem Kältekreis 16 sind ein Kompressor 56, ein Kondensator 58, ein Expansionsorgan 60 und ein Verdampfer 62 angeordnet. Der Kompressor 56 ist von dem Elektromotor 32 antreibbar, welcher wiederum vorzugsweise durch den Brennstoffzellenstapel 26 des Brennstoffzellensystems 14 mit Energie versorgt wird, aber kurzzeitig auch von der Batterie 34 mit Energie versorgt werden kann. Dem Verdampfer 62 ist ein Gebläse 64 zugeordnet. Über eine Außenluftleitung 66 kann von Außen Umgebungsluft angesaugt werden. Der Begriff "von Außen", wie er im Zusammenhang mit dieser Erfindung verwendet wird, bedeutet dabei von außerhalb des Innenraumes 78, bezeichnet somit die das Kraftfahrzeug 10 umgebende Luft. Die Außenluftleitung 66 führt zu einer Stelleinrichtung 68, welche die Außenluft dem Gebläse 64 zuführen kann. Die von der Stelleinrichtung 68 zum Gebläse 64 geleitete Luft strömt als Luftstrom 70 an dem Verdampfer 62 vorüber. Auf diese Weise kann dem Luftstrom 70 durch den Verdampfer 62 Wärmeenergie entzogen werden. Der gekühlte Luftstrom kann dann über eine Stelleinrichtung 72, eine Luftführung 74, eine Rückschlagklappe 96 und Luftauslässe 98 und 108 (siehe auch Figur 2) einem Fahrzeuginnenraum 78 zugeführt werden. Die Stelleinrichtung 72 kann beispielsweise durch ein Elektromagnetventil oder durch Rückschlagventile, welche jeweils nur eine Strömung von den beiden Zuleitungen hin zur Luftführung 74 zulassen, realisiert werden. Die Rückschlagklappe 96 lässt nur einen Luftstrom von der Stelleinrichtung 72 zu den Luftauslässen 98 und 108 zu und verhindert einen umgekehrten Luftstrom. Die gekühlte Luft strömt von den Luftauslässen 98 und 108 durch den Fahrzeuginnenraum 78 und verlässt diesen über einen Lufteinlass 100. Anschließend strömt die Luft über eine Luftführung 82, in der eine Rückschlagklappe 102 angeordnet ist, zurück zu der Stelleinrichtung 68, wo sie ganz oder teilweise nach Außen abgeführt wird oder zurück zum Gebläse 64 geleitet wird. Die Rückschlagklappe 102 lässt nur einen Luftstrom vom Lufteinlass 100 zu der Stelleinrichtung 68 zu und verhindert einen umgekehrten Luftstrom. Für die Führung der Luft nach Außen ist eine entsprechende von der Stelleinrichtung 68 abzweigende Leitung vorgesehen, die aus Gründen der Übersichtlichkeit nicht dargestellt ist. Über die Schaltung der Stelleinrichtung 68 lässt sich somit wahlweise ein Frischluft- oder ein Umluftkonzept realisieren, bei dem Luft von Außen über die Außenluftleitung 66 angesaugt wird oder die Luft aus der Luftführung 82 rezirkuliert wird. Auch Mischformen dieser Betriebsarten sind möglich. Ferner kann mittels der Stelleinrichtung 68, die über die Außenluftleitung 66 eingeleitete Luft einer Luftführung 84 und über diese einem Gebläse 86 zugeführt werden. In diesem Falle strömt diese Luft als Luftstrom 88 an heißen Teilen des Brennstoffzellensystems 14 direkt vorüber oder durch (nicht dargestellte) Wärmetauscher, die zwischen dem Luftstrom 88 und den heißen Teilen vermitteln. Die heißen Teile des Brennstoffzellensystems 14 sind vorzugsweise der Reformer 18, der Brennstoffzellenstapel 26 und der Nachbrenner 42. Auf diese Weise kann durch die Abwärme der heißen Teile des Brennstoffzellensystems 14 dem Luftstrom 88 Wärmeenergie zugeführt werden. Der erwärmte Luftstrom 88 führt über eine Luftführung 90 zu der elektrischen Heizeinrichtung 36, die direkt von einer vom Brennstoffzellenstapel 26 erzeugten oder von der Batterie 34 gespeicherten Energie versorgt wird. Somit kann in einem Heizbetrieb die ohnehin schon vorgewärmte Luft in der Luftführung 90 weiter erwärmt werden und über die Stelleinrichtung 72, die Luftführung 74, die Rückschlagklappe 96 und die Luftauslässe 98 und 108 dem Innenraum 78 zugeführt werden. Nach dem Durchströmen des Innenraums 78 führt der Luftstrom über den Lufteinlass 100, die Luftführung 82 und die Rückschlagklappe 102 zur Stelleinrichtung 68, wo er entweder nach Außen abgeführt wird oder zurück zum Gebläse 86 geleitet wird. Auch hierbei lässt sich über die Schaltung der Stelleinrichtung 68 somit wahlweise in einem solchen Heizbetrieb ein Umluftkonzept realisieren, bei dem Luft von Außen über die Außenluftleitung 66 angesaugt wird oder die Luft aus der Luftführung 82 rezirkuliert wird.

Nachfolgend werden verschiedene Betriebszustände aufgezeigt, die mittels der vorstehend beschriebenen Klimaanlage realisierbar sind:

Kühlbetrieb mit Umluftzirkulation: In diesem Betriebszustand ist die Stelleinrichtung 68 so geschaltet, dass Luft aus dem Innenraum 78 über die Luftführung 82 zu dem Gebläse 64 geführt wird. Dieser Luftstrom 70 wird gekühlt und über die Stelleinrichtung 72 und die Luftführung 74 in den Innenraum 78 geführt, wodurch dieser gekühlt wird. Um im Kühlbetrieb ein Aufheizen des Kofferraums, in dem die Klimaanlage 12 angeordnet ist, zu vermeiden, sind entsprechende (nicht dargestellte) Gebläse und Leitungen vorgesehen, welche die Abwärme des Brennstoffzellensystems 14 und die Abwärme des Kondensators 58 nach Außen abführen. Im Falle des Kondensators 58 könnte dieser alternativ auch Außen am Fahrzeug 10 angeordnet werden, um somit die Abwärme direkt abzutransportieren.

Kühlbetrieb mit Außenluftzuführung: In diesem Betriebszustand ist die Stelleinrichtung 68 so geschaltet, dass Außenluft über die Außenluftleitung 66 zu dem Gebläse 64 geführt wird. Der Luftstrom 70 wird gekühlt und über die Stelleinrichtung 72 und die Luftführung 74 in den Innenraum 78 geführt. Der über die Luftführung 82 aus dem Innenraum 78 führende Luftstrom wird von der Stelleinrichtung 68 nach Außen abgegeben. Hinsichtlich des Abführens der Abwärme des Brennstoffzellensystems 14 und des Kondensators 58 werden die im Rahmen des vorstehend beschriebenen Kühlbetriebs erläuterten Maßnahmen ergriffen.

Heizbetrieb mit Umluftzirkulation: In diesem Betriebszustand wird über die Luftführung 82, die Stelleinrichtung 68 und die Luftführung 84 ein Luftstrom 88 aus dem Innenraum 78 zum Gebläse 86 geführt. Der Kältekreis 16 ist nicht in Betrieb, d.h. der Elektromotor 32 wird nicht betrieben. Das Gebläse 86 führt den Luftstrom 88 an den heißen Teilen des Brennstoffzellensystems 14 vorüber. Die auf diese Weise vorgewärmte Luft wird mittels der Luftführung 90 zu der elektrischen Heizeinrichtung 36 und weiter zur Stelleinrichtung 72 geführt. Die elektrische Heizeinrichtung 36 wird zur Erwärmung der Luft in der Luftführung 90 mit elektrischem Strom betrieben. Anschließend strömt die erwärmte Luft über die Stelleinrichtung 72 und die Luftführung 74 in den Innenraum 78.

Heizbetrieb mit Außenluftzuführung: In diesem Betriebszustand wird Außenluft über die Außenluftleitung 66 von der Stelleinrichtung 68 der Luftführung 84 zugeführt. Die durch den Betrieb des Brennstoffzellensystem 14 entstehende Abwärme erwärmt den Luftstrom 88. Dieser erwärmte Luftstrom wird, wie im vorstehend beschriebenen Betriebszustand, über die Luftführung 90, die elektrische Heizeinrichtung 36, die Stelleinrichtung 72 und die Luftführung 74 in den Innenraum 78 geleitet. Anschließend wird dieser Luftstrom über die Luftführung 82 zur Stelleinrichtung 68 geführt, wo er nach Außen abgegeben wird.

Diese unterschiedlichen Betriebszustände werden über eine elektronische Steuereinheit angesteuert, die je nach Temperatur im Innenraum 78, Außentemperatur, eingestellten Solltemperaturen und gewünschtem Klimatisierungsbetrieb den geeigneten Betriebszustand auswählt. Diese elektronische Steuereinheit ist aus Gründen der Übersichtlichkeit in den Figuren nicht dargestellt, jedoch ist dem Fachmann sofort ersichtlich, dass diese zumindest mit den entsprechenden Fördereinrichtungen in den Strängen 20, 22, 24, 44 und 46 der Energieverteilung in der elektrischen Leitung 30, den Gebläsen 64 und 86, der elektrischen Heizeinrichtung, dem Elektromotor 32, den Stelleinrichtungen 68 und 72 sowie den entsprechenden Temperatursensoren verbunden ist.

Figur 2 zeigt eine schematische Darstellung des erfindungsgemäßen Kraftfahrzeugs 10 mit der Klimaanlage 12. Die Klimaanlage 12 ist im Kofferraum montierbar, vorzugsweise als nachrüstbare Einheit. Zusätzlich zur beschriebenen Klimaanlage 12 hat das Kraftfahrzeug 10 eine herkömmliche Luftkonditioniereinrichtung 92, welche Luft im herkömmlichen Sinne für Klimatisierungszwecke konditioniert. Die Luftkonditioniereinrichtung 92 kann dabei eine herkömmliche Klimaanlage umfassen, bei der ein Kompressor eines herkömmlichen Kältekreises mechanisch direkt von einem Antriebsaggregat 94, vorzugsweise einem Verbrennungsmotor, antreibbar ist oder bei der der Kompressor mittels elektrischer Energie antreibbar ist, welche von einer vom Antriebsaggregat 94 antreibbaren Lichtmaschine erzeugt wird, d.h. der Kompressor ist indirekt vom Antriebsaggregat 94 antreibbar. Alternativ oder zusätzlich kann die Luftkonditioniereinrichtung 92 Mittel zum Erwärmen von Luft mittels Abwärme des Antriebsaggregats 94 umfassen. Während der Fahrt des Kraftfahrzeugs 10 und dem damit verbundenen Betrieb des Antriebsaggregats 94 kann der Innenraum 78 über die herkömmliche, fahrzeugeigene Luftkonditioniereinrichtung 92 in allgemein bekannter Weise gekühlt bzw. mittels Abwärme des Antriebsaggregats 94 erwärmt werden. Bei Stillstand des Antriebsaggregats 94 kann der Innenraum 78 über die Klimaanlage 12 klimatisiert werden. Erfindungsgemäß teilen sich hierfür die Luftkonditioniereinrichtung 92 und die Klimaanlage 12 die selben Luftzuführungen 74 und 82, die sich von der im Kofferraum angebrachten Klimaanlage 12 durch den Fahrzeuginnenraum 78 hindurch bis zur im Motorraum angeordneten Luftkonditioniereinrichtung 92 erstrecken. In Figur 2 sind diese Luftführungen 74, 82 schematisch dargestellt, wobei in der Praxis diese Luftführungen natürlich unauffällig hinter Verkleidungen des Kraftfahrzeugs 10 verlegt werden. Zum Zwecke der gemeinsamen Nutzung dieser Luftführungen 74 und 82, sind die bereits erwähnten Rückschlagklappen 96 und 102 sowie zwei weitere Rückschlagklappen 104 und 106 vorgesehen. Bei einer Klimatisierung mittels der Luftkonditioniereinrichtung 92 wird die konditionierte Luft von der Luftkonditioniereinrichtung 92 in Fahrzeuglängsrichtung gesehen nach hinten an der durch die Luftströmung geöffneten Rückschlagklappe 104 vorbei zu den Luftauslässen 98 und 108 geführt. Die Rückschlagklappe 104 lässt nur einen Luftstrom von der Luftkonditioniereinrichtung 92 zu den Luftauslässen 98 und 108 zu, wenn die Klimatisierung mittels der Luftkonditioniereinrichtung 92 durchgeführt wird. Die Rückschlagklappe 96 blockiert in diesem Betriebszustand ein Passieren von Luft und verhindert somit, dass Luft zur Klimaanlage 12 strömt. Wird die Klimatisierung über die Klimaanlage 12 erwirkt, dann strömt die konditionierte Luft von der Klimaanlage 12 in Fahrzeuglängsrichtung gesehen nach vorne an der durch den Luftstrom geöffneten Rückschlagklappe 96 vorbei zu den Luftauslässen 98 und 108. Die Rückschlagklappe 104 blockiert in diesem Betriebszustand ein Passieren von Luft und verhindert somit, dass Luft zur Luftkonditioniereinrichtung 92 strömt. Nach einem ähnlichen Prinzip wird durch den Betrieb der Luftkonditioniereinrichtung 92 oder der Klimaanlage 12 ein entsprechender Sog in der Luftführung 82 hin zu der entsprechenden Vorrichtung erzeugt. Dieser Sog führt dazu, dass die Rückschlagklappe 102 bei Betrieb der Klimaanlage 12 und die Rückschlagklappe 106 bei Betrieb der Luftkonditioniereinrichtung 92 geöffnet ist und die jeweils andere der beiden Rückschlagklappen 102 und 106 geschlossen ist, so dass nur ein Luftstrom hin zu der entsprechenden Sog erzeugenden Vorrichtung zugelassen wird.

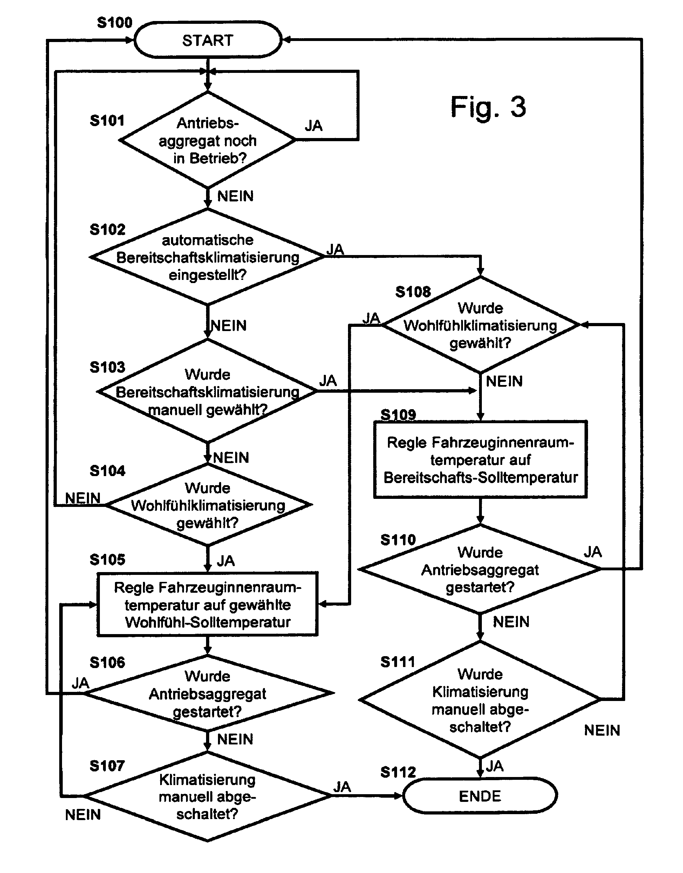

Figur 3 zeigt ein Flussdiagramm des Klimatisierungsbetriebs der Klimaanlage 12. Die Routine aus Figur 3, welche von der elektronischen Steuereinheit ausgeführt wird, startet bei Schritt S100, wenn die Klimaanlage 12 manuell eingeschaltet wird. Bei Schritt S101 wird bestimmt, ob das Antriebsaggregat 94 immer noch in Betrieb ist. Der Prozess fährt erst dann zu Schritt S102 fort, wenn die Abfrage in Schritt S101 negativ ist. In Schritt S102 wird bestimmt, ob der Benutzer über einen Auswahlschalter oder eine entsprechende Programmierung der Klimaanlage 12 einen automatischen Bereitschaftsklimatisierungsbetrieb ausgewählt hat. Falls dies nicht der Fall ist, fährt der Prozess zu Schritt S103 fort, wo bestimmt wird, ob der Benutzer manuell eine Bereitschaftsklimatisierung ausgewählt hat. Ist dies nicht der Fall, dann fährt der Prozess zu Schritt S104 fort, wo bestimmt wird, ob der Benutzer manuell eine Wohlfühlklimatisierung ausgewählt hat. Falls dies mit "JA" zu beantworten ist, fährt der Prozess zu Schritt S105 fort, bei dem eine Wohlfühlklimatisierung durchgeführt wird. Bei dieser Wohlfühlklimatisierung wird der Innenraum 78 des Kraftfahrzeugs 10 auf eine Wohlfühltemperatur (z.B. 18°C) klimatisiert, indem eine Auswahl aus den verschiedenen Heiz- und Kühlmodi von der elektronischen Steuereinheit getroffen wird. Mit dem nachfolgenden Schritt S106 wird festgelegt, dass diese Wohlfühlklimatisierung automatisch gestoppt wird, wenn das Antriebsaggregat 94 gestartet wird. Wenn in Schritt S106 demnach bestimmt wird, dass das Antriebsaggregat 94 noch nicht läuft, wird in S107 bestimmt, ob die Klimaanlage 12 manuell abgestellt wurde. Bei einer manuellen Abschaltung endet der Prozess bei Schritt S112, ansonsten kehrt der Prozess zurück zu Schritt S105. Falls der Benutzer in Schritt S104 keine Wohlfühlklimatisierung gewählt hat, kehrt der Prozess zu Schritt S101 zurück. Falls in Schritt S102 bestimmt wurde, dass eine automatische Bereitschaftsklimatisierung gewählt wurde, dann fährt der Prozess von dort zu Schritt S108 fort, wo bestimmt wird, ob von dem Benutzer manuell eine Wohlfühlklimatisierung gewählt wurde. Ist dies der Fall, dann fährt der Prozess zu Schritt S105 fort, wo die bereits beschriebene Wohlfühlklimatisierung durchgeführt wird. Falls in Schritt S108 bestimmt wird, dass der Benutzer keine Wohlfühlklimatisierung ausgewählt hat, dann fährt der Prozess zu Schritt S109 fort, wo die erfindungsgemäße Bereitschaftsklimatisierung durchgeführt wird. Bei dieser Bereitschaftsklimatisierung wird die Temperatur im Innenraum 78 auf eine Bereitschafts-Solltemperatur (z.B. 25°C) geregelt, die sich von der Wohlfühltemperatur unterscheidet. Dies wird realisiert, indem die elektronische Steuereinheit in geeigneter Weise aus den beschriebenen Heiz- und Kühlbetriebsarten auswählt. Ist die Außentemperatur hoch, dann ist die Bereitschafts-Solltemperatur größer als die Wohlfühltemperatur. Ist hingegen die Außentemperatur niedrig, dann ist die Bereitschafts-Solltemperatur geringer als die Wohlfühltemperatur. Somit wird beispielsweise bei hoher Außentemperatur ein Aufheizen des Innenraumes 78 verhindert und im Bedarfsfall ein sehr schnelles Erreichen der Wohlfühltemperatur gewährleistet, weil der Innenraum 78 bereits "vorgekühlt" ist. Nach Schritt S109 fährt der Prozess zu Schritt S110 fort, wo überprüft wird, ob das Antriebsaggregat 94 gestartet wurde. Ist dies der Fall, dann kehrt der Prozess zu Schritt S100 zurück. Ansonsten fährt der Prozess zu Schritt S111 fort, wo bestimmt wird, ob der Benutzer die Klimatisierung manuell abgestellt hat - wenn "JA", dann endet der Prozess bei Schritt S112 und wenn "NEIN", dann kehrt der Prozess zu Schritt S108 zurück.

Der bevorzugte Betrieb der Klimaanlage 12 sieht in der Praxis so aus, dass eine automatische Bereitschaftsklimatisierung gewählt ist. Wird das Antriebsaggregat 94 betrieben, dann kann der Innenraum 78 über die auf das Fahrzeug optimierte, sehr effektive und speziell ausgelegte Luftkonditioniereinrichtung 92 klimatisiert werden. Sobald das Antriebsaggregat 94 abgestellt wird (und die Insassen das Kraftfahrzeug 10 eventuell verlassen), startet die Klimaanlage 12 die Bereitschaftsklimatisierung, die den Innenraum bei hoher Außentemperatur auf beispielsweise 25°C kühlt. Dieser Bereitschaftsklimatisierungsbetrieb kann mit 60 Litern Brennstoff problemlos 12 Tage im Dauerbetrieb erfolgen. Der Bereitschaftsklimatisierungsbetrieb wird solange durchgeführt, bis der Benutzer kurz vor Fahrtantritt eine Wohlfühlklimatisierung wählt, die dann den Innenraum 78 auf beispielsweise 18°C kühlt. Die Wohlfühlklimatisierung wird dann solange durchgeführt bis das Antriebsaggregat 94 wieder gestartet wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Kraftfahrzeug
- 12: Klimaanlage
- 14: Brennstoffzellensystem
- 16: Kältekreis
- 18: Reformer
- 20: Brennstoffstrang
- 22: Brennstoffstrang
- 24: Oxidationsmittelstrang
- 26: Brennstoffzellenstapel
- 28: Kathodenzuluftstrang
- 30: Elektrische Leitung
- 32: Elektromotor
- 34: Batterie
- 36: Elektrische Heizeinrichtung
- 38: Anodenabgasstrang
- 40: Mischeinheit
- 42: Nachbrenner
- 44: Brennstoffstrang
- 46: Oxidationsmittelstrang
- 48: Mischeinheit
- 50: Kathodenabluftstrang
- 52: Wärmetauscher
- 54: Abgasauslass
- 56: Kompressor
- 58: Kondensator
- 60: Expansionsorgan
- 62: Verdampfer
- 64: Gebläse
- 66: Außenluftleitung
- 68: Stelleinrichtung
- 70: Luftstrom
- 72: Stelleinrichtung
- 74: Luftführung
- 78: Fahrzeuginnenraum
- 80: Sitzbank
- 82: Luftführung
- 84: Luftführung
- 86: Gebläse
- 88: Luftstrom
- 90: Luftführung
- 92: Luftkonditioniereinrichtung
- 94: Antriebsaggregat
- 96: Rückschlagklappe
- 98: Luftauslass
- 100: Lufteinlass
- 102: Rückschlagklappe
- 104: Rückschlagklappe
- 106: Rückschlagklappe
- 108: Luftauslass

## Patentansprüche

1. Kraftfahrzeug (10) mit:
- einer Klimaanlage (12), welche eine Brennstoffzelle (26) zum Betreiben eines Kältekreises (16) aufweist,
- einer Luftkonditioniereinrichtung (92) zum Konditionieren von Luft mittels Abwärme eines Antriebsaggregats (94) und/oder einer vom Antriebsaggregat (94) direkt oder indirekt antreibbaren Klimaanlage, und
- einer Luftführung (74) zum Führen von Luft von der Luftkonditioniereinrichtung (92) über einen Luftauslass (98, 108) in einen Fahrzeuginnenraum (78),
- wobei die Luftführung (74) auch dazu angepasst ist, von der Klimaanlage (12) konditionierte Luft zum Luftauslass (98, 108) zu führen.

2. Kraftfahrzeug (10) gemäß Anspruch 1, **dadurch gekennzeichnet, dass** zwischen dem Luftauslass (98, 108) und der Luftkonditioniereinrichtung (92) sowie zwischen dem Luftauslass (98, 108) und der Klimaanlage (92) jeweils Rückschlagklappen (96, 104) vorgesehen sind, welche jeweils nur eine Strömung hin zum Luftauslass (98, 108) zulassen.

3. Kraftfahrzeug (10) gemäß einem der vorhergehenden Ansprüche, **dadurch gekennzeichnet, dass** des Weiteren eine Luftführung (82) vorgesehen ist, um Luft über einen Lufteinlass (100) aus dem Fahrzeuginnenraum (78) zu der Luftkonditioniereinrichtung (92) zu führen, wobei die Luftführung (82) auch dazu angepasst ist, Luft vom Fahrzeuginnenraum (78) zur Klimaanlage (12) zu führen.

4. Kraftfahrzeug (10) gemäß Anspruch 3, **dadurch gekennzeichnet, dass** zwischen dem Lufteinlass (100) und der Luftkonditioniereinrichtung (92) sowie zwischen dem Lufteinlass (100) und der Klimaanlage (12) jeweils Rückschlagklappen (102, 106) vorgesehen sind, welche jeweils nur eine Strömung weg vom Lufteinlass (100) zulassen.

5. Kraftfahrzeug (10) gemäß einem der vorhergehenden Ansprüche, **dadurch gekennzeichnet, dass** der Luftauslass (98, 108) von der Luft der Luftkonditioniereinrichtung (92) und der Luft der Klimaanlage (12) aus unterschiedlichen Richtungen anströmbar ist.

6. Kraftfahrzeug (10) gemäß einem der vorhergehenden Ansprüche, **dadurch gekennzeichnet, dass** die Klimaanlage (12) im Kofferraum des Kraftfahrzeugs (10) angeordnet ist und die Luftkonditioniereinrichtung (92) im Motorraum des Kraftfahrzeugs (10) angeordnet ist.
